# EUROPÄISCHE PATENTSCHRIFT

(11) **EP 2 920 036 B1**
(45) Veröffentlichungstag und Bekanntmachung des Hinweises auf die Patenterteilung: **26.09.2018**
(21) Anmeldenummer: 13794851.9
(22) Anmeldetag: 14.11.2013
(51) Int. Cl.: B60T 7/04, B60T 11/20, G01D 5/14, G01B 5/00

(54) **HAUPTBREMSZYLINDERANORDNUNG MIT BETÄTIGUNGSERFASSUNG FÜR EINE KRAFTFAHRZEUGBREMSANLAGE**
MASTER CYLINDER ARRANGEMENT WITH ACTIVATION DETECTION FOR A VEHICLE BRAKE SYSTEM
ENSEMBLE MAÎTRE-CYLINDRE DE FREIN À DÉTECTION D'ACTIONNEMENT POUR SYSTÈME DE FREINAGE DE VÉHICULE À MOTEUR

(30) Priorität: 16.11.2012 DE 102012022519
(43) Veröffentlichungstag der Anmeldung: 23.09.2015
(73) Patentinhaber: Lucas Automotive GmbH, 56070 Koblenz (DE)
(72) Erfinder: GIESE, Hans-Martin, 56751 Polch (DE); PETRY, Torsten, 56068 Koblenz (DE); LAREQUI, David Lopéz, 56072 Koblenz (DE)
(74) Vertreter: Thum, Bernhard
(86) Internationale Anmeldenummer: PCT/EP2013/073847
(87) Internationale Veröffentlichungsnummer: WO 2014/076190

(56) Entgegenhaltungen:
- DE-A1- 3 723 916
- DE-A1-102008 020 934
- DE-A1-102009 011 807

## Beschreibung

Die vorliegende Erfindung betrifft eine Hauptbremszylinderanordnung mit Betätigungserfassung für eine Kraftfahrzeugbremsanlage mit wenigstens einer Kolbenanordnung mit einem Kolben, der in einer Zylinderbohrung in einem Zylindergehäuse verlagerbar geführt ist, wobei der Kolben mit der Zylinderbohrung eine mit einem hydraulischen Bremskreislauf fluidisch gekoppelte Druckkammer begrenzt und bei einem Vorhub von einer Ausgangsstellung in eine mögliche Betätigungsstellung entlang einer Verlagerungsachse, die im Wesentlichen mit einer Längsasche der Zylinderbohrung zusammenfällt, verlagert werden kann, und bei einem Rückhub von einer Betätigungsstellung in die Ausgangsstellung verlagert wird, wobei dem Kolben ein Kupplungselement zugeordnet ist, welches zur gemeinsamen Verlagerung mit einem Positionserfassungsstab gekoppelt ist, der zur ersten Zylinderbohrung im wesentlichen parallel verlagerbar geführt ist, wobei die Position des Positionserfassungsstabs mittels eines an dem Zylindergehäuse angebrachten Positionserfassungssensor erfassbar ist.

Eine Hauptbremszylinderanordnung der eingangs bezeichneten Art ist bereits aus dem Stand der Technik gemäß dem Dokument DE 10 2008 020 934 A1 bekannt. Dabei ist vorgesehen, dass der Positionserfassungsstab fest mit dem Kolben gekoppelt ist und sich über die gesamte Hubbewegung des Kolbens mit diesem mitbewegt. Dies führt dazu, dass eine entsprechende raumfordernde Anordnung am Hauptbremszylindergehäuse vorgesehen werden muss, die einen hinreichend langen Positionserfassungsstab mit ausreichender, der Hubbewegung des Kolbens entsprechender Bewegungsfreiheit aufweist. Entsprechend großvolumig muss das Zylindergehäuse ausgebildet werden. Dieses Erfordernis steht aber im Widerspruch zu der im modernen Kraftfahrzeugbau immer bedeutender werdenden Forderung nach raum- und gewichtssparenden Komponenten.

Ähnliche Anordnungen finden sich in den Dokumenten DE 37 23 842 A1, DE 37 23 916 A1, DE 38 42 225 A1 und DE 10 2009 011807 A1.

Es ist Aufgabe der vorliegenden Erfindung, eine Hauptbremszylinderanordnung der eingangs bezeichneten Art bereitzustellen, die sich bei zuverlässiger Funktionsweise durch eine kompakte und kostengünstige Bauform vom Stand der Technik unterscheidet.

Diese Aufgabe wird durch eine Hauptbremszylinderanordnung gelöst, bei der vorgesehen ist, dass das Kupplungselement relativ zum Kolben zu einer gemeinsamen Hubbewegung mit diesem arretierbar und nach Überschreiten eines vorbestimmten Wegs der Hubbewegung der Kolben relativ zum Kupplungselement weiter verlagerbar ist.

In Abweichung vom Stand der Technik sieht die vorliegende Erfindung vor, dass sich das Kupplungselement, das zur gemeinsamen Verlagerung mit dem Positionserfassungsstab gekoppelt oder koppelbar ist, nicht über die gesamte Hubbewegung des Kolbens mitbewegt, sondern nur über einen Teilbereich dieser Hubbewegung. Für diesen Teilbereich ist das Kupplungselement mit dem Kolben durch eine Arretierung zur gemeinsamen Verlagerung gekoppelt. Wird aber der vorbestimmte Weg der Hubbewegung des Kolbens erreicht und überschritten, so wird das Kupplungselement sozusagen vom Kolben abgekoppelt. Der Kolben bewegt sich dann ohne Mitnahme des Kupplungselements weiter. Dementsprechend wird auch der Positionserfassungsstab nicht weiter bewegt. Dadurch kann der für diesen erforderliche Bewegungsspielraum deutlich kleiner bemessen werden. Dies mag auf den ersten Blick nachteilig erscheinen. Es wurde aber erkannt, dass es sowohl für die Erzeugung eines Bremslichtsignals als auch für die Steuerung von Schlupfregelanlagen nicht erforderlich ist, die gesamte Hubbewegung des Kolbens zu erfassen. Vielmehr reicht es aus, nur einen Teilbereich der Hubbewegung des Kolbens zu überwachen, nämlich insbesondere die Hubbewegung des Kolbens zu Beginn zwischen einer Ausgangsstellung, in der der Kolben unbetätigt ist, und einem vorbestimmten Kolbenweg, an dem bereits eine substantielle Bremswirkung eingetreten ist. Die Erfindung macht sich diese Erkenntnis zu Nutze, wodurch Bauraum und Gewicht eingespart werden können.

Eine Weiterbildung der Erfindung sieht vor, dass dem Kupplungselement eine erste Anlagefläche des Kolbens, des Zylindergehäuses oder eines mit einem von diesem gekoppelten

Bauteils zugeordnet ist, an der das Kupplungselement in der Ausgangsstellung anliegt oder sich an dieser abstützt. Dadurch kann sichergestellt werden, dass sich das Kupplungselement bei unbetätigter Bremse in einer definierten Ausgangsstellung befindet, so dass auch über den Positionserfassungsstab zuverlässig der unbetätigte Zustand der Bremse ermittelbar ist.

Ferner kann erfindungsgemäß vorgesehen sein, dass dem Kupplungselement eine zweite Anlagefläche zugeordnet ist, an der das Kupplungselement beim Überschreiten des vorbestimmten Wegs der Hubbewegung anliegt. Dadurch ist gewährleistet, dass sich das Kupplungselement nach Überschreiten des vorbestimmten Wegs der Hubbewegung des Kolbens nicht weiter bewegt, sondern relativ zum Zylindergehäuse in einer vorbestimmten Position bis zu einer Rückhubbewegung des Kolbens verharrt.

Vorzugsweise kann in diesem Zusammenhang vorgesehen sein, dass die erste oder/und die zweite Anlagefläche Teil eines integral ausgebildeten Abschnitts des Zylindergehäuses ist. Alternativ oder zusätzlich hierzu ist es möglich, dass die erste oder/und die zweite Anlagefläche an einem im Zylindergehäuse ausgebildeten Zusatzelement vorgesehen ist, wobei das Zusatzelement insbesondere in Form einer den Kolben in Umfangsrichtung umschließenden Scheibe oder eines ringförmigen Dichtungsbauteils ausgebildet ist. Die Verwendung eines Zusatzelements erlaubt es, auf herkömmliche Gestaltungen des Zylindergehäuses zurückzugreifen und diese, sofern überhaupt möglich, nur geringfügig zu modifizieren. Außerdem werden hierdurch die Fertigung und die Montage erleichtert.

Eine Ausführungsform der Erfindung sieht vor, dass das Kupplungselement ein den Kolben zumindest teilweise in Umfangsrichtung umgreifender Körper ist. Dabei ist es erfindungsgemäß möglich, dass das Kupplungselement einen Anlagering aufweist, der mit einer Anlagefläche versehen ist, über die es an dem Kolben angreift. Dieser Anlagering kann geschlossen oder geschlitzt sein. Die Anlagefläche kann beispielsweise von der Innenumfangsfläche eines rohrförmigen Abschnitts ausgebildet sein, der integral mit dem Kupplungselement verbunden ist. Ferner sieht eine Ausführungsvariante der Erfindung vor, dass das Kupplungselement an dem Kolben unter radialer Vorspannung anliegt und durch Reibschluss mit dem Kolben gekoppelt ist. Um sicherzustellen, dass innerhalb des vorbestimmten Wegs der Hubbewegung des Kolbens eine gemeinsamen Bewegung zwischen Kupplungselement und Kolben erfolgt, können zusätzliche Maßnahmen zur Gewährleistung des Reibschlusses über die Lebensdauer der Hauptbremszylinderanordnung getroffen werden. Dabei kann insbesondere vorgesehen sein, dass die Anlagefläche mit einem speziellen Reibbelag versehen ist.

Zusätzlich oder alternativ zu einem Reibschluss ist es ferner möglich, dass das Kupplungselement über wenigstens ein Federelement zur gemeinsamen Bewegung mit dem Kolben gekoppelt ist. So lässt sich beispielsweise eine Anordnung einsetzen, mit der das Kupplungselement über das Federelement derart vorgespannt ist, dass das Kupplungselement so lange eine gemeinsamen Bewegung mit dem Kolben ausführt, bis es an einem Anschlag anschlägt und dann an einer weiteren Bewegung zusammen mit dem Kolben gehindert wird. Dabei kann vorgesehen sein, dass infolge der weiteren Bewegung des Kolbens das Federelement komprimiert wird, wie im Folgenden noch im Detail erläutert. Alternativ ist es möglich, dass sich bis zum Überschreiten des vorbestimmten Wegs x das Federelement entspannt und dann konstante Länge aufweist. In diesem Zusammenhang ist es bei einer Ausführungsvariante der Erfindung möglich, dass das Kupplungselement über das Federelement in eine Ausgangsstellung relativ zu dem Kolben vorgespannt ist und dabei insbesondere topfartig ausgebildet ist. Weiterhin kann in diesem Zusammenhang vorgesehen sein, dass das Kupplungselement einen Anschlagring aufweist, mit dem es infolge der Hubbewegung des Kolbens gegen das Zylindergehäuse bei Überschreiten des vorbestimmten Wegs der Hubbewegung in Anlage bringbar ist, wobei das Kupplungselement bei fortschreitender Hubbewegung des Kolbens unter Einwirkung des Federelements relativ zum Zylindergehäuse ortsfest bleibt.

Eine alternative Ausführungsform der Erfindung sieht vor, dass sich das Federelement einenends an dem Kupplungselement und anderenends an einer kolbenfesten Haltebuchse oder einem zylindergehäusefesten Verschlusselement abstützt. Dabei kann die Haltebuchse integral am Kolben ausgebildet sein. Vorzugsweise ist aber vorgesehen, dass die Haltebuchse als gesondertes Bauteil ausgebildet und am Kolben, etwa durch Verrasten oder über zusätzliche Fixiermittel, fixiert ist. Auch dies erleichtert die Fertigung und die Montage, weil so der Kolben beispielsweise zunächst mit dem Kupplungselement und der Haltebuchse sowie dem dazwischen angeordneten Federelement zu einer Baugruppe vormontiert und anschließend in das Hauptbremszylindergehäuse eingesetzt werden kann. Bei einem Abstützen des Federelements an einem zylindergehäusefesten Verschlusselement, kann sich das Kupplungselement, gemäß einer weiteren Ausführungsform der Erfindung, an einer Durchmesserstufe oder Schulter des Kolbens abstützen. Dadurch kann das Kupplungselement allein über das Federelement und die Anlageflächen an Kolben und Verschlusselement über seine gesamte Bewegungsstrecke vollständig in seiner Position festgelegt werden.

Hinsichtlich der Positionserfassungsvorrichtung sieht eine Weiterbildung der Erfindung vor, dass der der Positionserfassungsstab in einem Führungsschacht innerhalb des Zylindergehäuses geführt ist, wobei der Führungsschacht mit einer Durchmesserstufe ausgebildet ist, und wobei der Positionserfassungsstab einen Erfassungsabschnitt aufweist oder mit diesem gekoppelt ist, an dem ein Sensorelement vorgesehen ist. Ferner ist es in diesem

Zusammenhang möglich, dass das Sensorelement einen Magnetkörper aufweist und dass der Positionserfassungssensor ein Hall-Sensor ist.

Im Folgenden werden Ausführungsbeispiele der Erfindung anhand der Figuren erläutert. Es stellen dar:
- Fig. 1: eine achsenthaltende Schnittansicht einer ersten Ausführungsform der erfindungsgemäßen Hauptbremszylinderanordnung in einer Ausgangsstellung;
- Fig. 2: eine Teilschnittansicht der Ausführungsform gemäß Figur 1 in einer betätigten Stellung;
- Fig. 3: eine Teilschnittansicht entsprechend Figur 2 einer zweiten Ausführungsform der Erfindung in der Ausgangsstellung;
- Fig. 4: eine Teilschnittansicht entsprechend Figur 3 der zweiten Ausführungsform der Erfindung in einer betätigten Stellung;
- Fig. 5: eine Teilschnittansicht entsprechend Figur 3 einer dritten Ausführungsform der Erfindung in der Ausgangsstellung;
- Fig. 6: eine Teilschnittansicht entsprechend Figur 5 der dritten Ausführungsform der Erfindung in der Ausgangstellung;
- Fig. 7: eine Teilschnittansicht entsprechend Figur 3 einer vierten Ausführungsform der Erfindung in der Ausgangsstellung;
- Fig. 8: eine räumliche Darstellung einer Ausführungsform des Kupplungselements ;
- Fig. 9: eine Teilschnittansicht entsprechend Figur 2 einer fünften Ausführungsform der Erfindung in der Ausgangsstellung;
- Fig. 10: eine Teilschnittansicht entsprechend Figur 9 der fünften Ausführungsform der Erfindung in einer betätigten Stellung;
- Fig. 11: eine Teilschnittansicht entsprechend Figur 2 einer sechsten Ausführungsform der Erfindung in der Ausgangsstellung;
- Fig. 12: eine Teilschnittansicht entsprechend Figur 11 der sechsten Ausführungsform der Erfindung in einer betätigten Stellung; und
- Fig. 13: eine Teilschnittansicht entsprechend Figur 2 einer siebten Ausführungsform der Erfindung in der Ausgangsstellung.

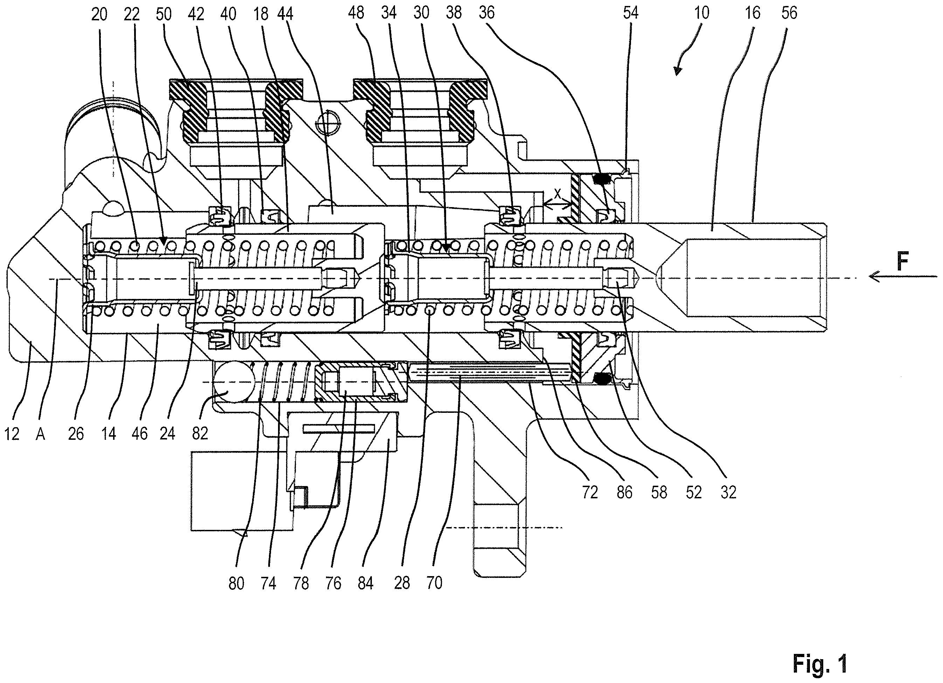

In Figur 1 ist eine erfindungsgemäße Hauptbremszylinderanordnung in einer die Längsachse A der Zylinderbohrung enthaltenden Schnittansicht gezeigt und allgemein mit 10 bezeichnet. Diese umfasst ein Zylindergehäuse 12, in der eine Zylinderbohrung 14 vorgesehen ist. In der Zylinderbohrung 14 ist eine Kolbenanordnung mit einem ersten Kolben 16 und einem zweiten Kolben 18 aufgenommen. Der zweite Kolben 18 stützt sich über eine Rückstellfeder 20 am Grund der Zylinderbohrung 14 ab. Die Rückstellfeder 20 ist über eine Vorspannvorrichtung 22 mit einem Bolzen 24 und einer Buchse 26 vorgespannt. Der erste Kolben 16 stützt sich am zweiten Kolben 18 über eine weitere Rückstellfeder 28 ab, die über eine weitere Vorspannvorrichtung 30 mit einem Bolzen 32 und einer Buchse 34 versehen ist. Die beiden Kolben 16 und 18 sind in der Zylinderbohrung 14 unter Verwendung von Dichtungen 36, 38, 40, 42 gedichtet geführt, so dass sie mit der Zylinderbohrung 14 Druckkammern 44, 46 einschließen. Diese Druckkammern 44, 46 sind hydraulisch mit einem nicht gezeigten Hydraulikkreis einer Kraftfahrzeugbremsanlage gekoppelt. Ferner erkennt man Anschlüsse 48, 50 zum Anschließen eines Fluidbehälters (nicht gezeigt) in bekannter Weise.

Die Dichtung 36 ist in einem gesonderten Verschlusselement 52 aufgenommen, das durch eine Verstemmung oder Rastverbindung 54 in dem Zylindergehäuse 12 aufgenommen ist. In diesem ist auch der Kolben 16 geführt.

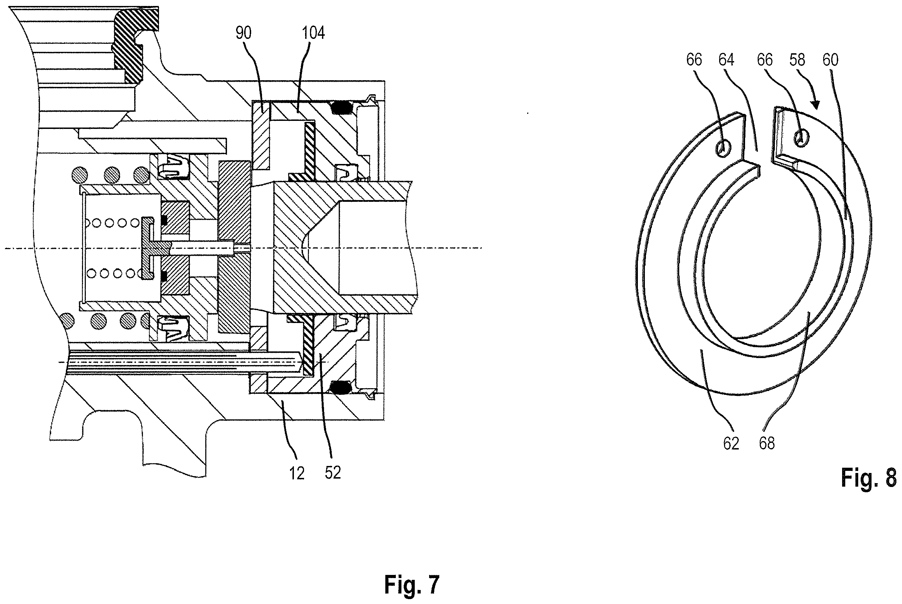

Auf der Außenumfangsfläche 56 des Kolbens 16 ist ein Kupplungselement 58 angebracht, das in Figur 8 in räumlicher Einzelteildarstellung gezeigt ist. Dieses weist einen geschlitzten, ringförmigen Körper mit einem in Richtung der Längsachse A verlaufenden Rohrabschnitt 60 und einem in radialer Richtung verlaufenden Ringabschnitt 62 auf. Beidseits des Schlitzes 64 sind Spreizöffnungen 66 zur Erleichterung der Montage mit einem Spreizwerkzeug vorgesehen. Die Innenumfangsfläche 68 des Rohrabschnitts 60 ist als Reibfläche, gegebenenfalls mit einem Reibbelag, ausgebildet.

Das Kupplungselement 58 sitzt unter radialer Vorspannung auf der Außenumfangsfläche 56 des ersten Kolbens 16. In der in Figur 1 gezeigten Ausgangsstellung liegt es flächig an der dem Innenraum des Zylindergehäuses 12 zugewandten Fläche des Verschlusselements 52 an. Das Kupplungselement 58 greift mit einer Stelle seines Ringabschnitts 62 an einem Positionserfassungsstab 70 an, der in einem Führungsschacht 72 innerhalb des Zylindergehäuses 12 geführt ist. An seinem von dem Kupplungselement 58 abgewandten Ende ist der Positionserfassungsstab 70 mit einem verschiebbar in einer Bohrung 74 aufgenommenen Sensorelement 76 mit einem Magnetkörper 78 gekoppelt. Das Sensorelement 76 ist über eine Druckfeder 80 in seine in Figur 1 gezeigte Stellung vorgespannt. Die Bohrung 74 ist über einen kugelförmigen Verschlusskörper 82 verschlossen. Ferner erkennt man, dass an dem Zylindergehäuse 12 ein Positionserfassungssensor 84 vorgesehen ist, der nach Maßgabe der Auslenkung des Sensorelements 76 ein Positionssignal an die Fahrzeugelektronik bereitstellt.

Wird nun aus der Ausgangsstellung gemäß Figur 1 die Hauptbremszylinderanordnung 10 über ein Bremspedal (nicht gezeigt) betätigt, so wird auf den ersten Kolben 16 eine Kraft F ausgeübt und dieser zur Erzeugung eines Bremsdrucks entlang der Längsachse A in das Zylindergehäuse 12 hinein verlagert. Aufgrund des Reibschlusses zwischen dem ersten Kolben 16 und dem Kupplungselement 58 bewegt sich das Kupplungselement 58 mit dem ersten Kolben 16 mit. Infolge der Bewegung des Kupplungselements 58 wird auch der Positionserfassungsstab 70 und mit diesem das Sensorelement 76 zur Positionserfassung verlagert.

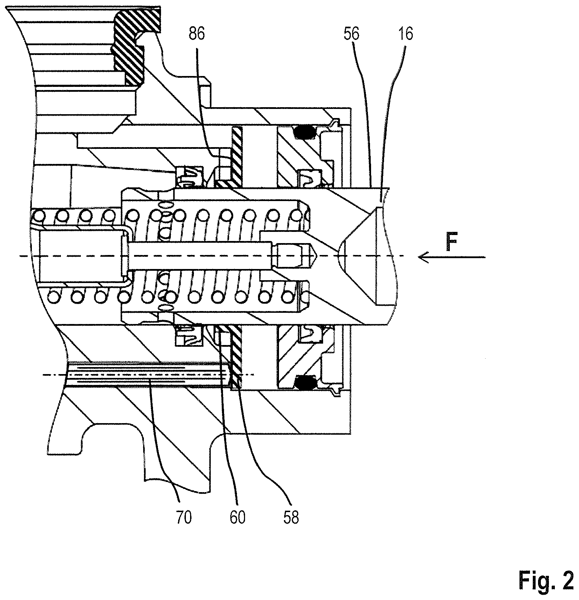

Sobald aber der erste Kolben 16 um einen vorbestimmten Weg x verlagert wurde, legt sich das Kupplungselement 58 an einen Anlagevorsprung 86 des Hauptbremszylindergehäuses 12 an. Dieser Zustand ist in Figur 2 gezeigt. Eine weitere Bewegung des Kupplungselements 58 mit dem ersten Kolben 16 ist wegen dieser gegenseitigen Anlage nicht mehr möglich. Wird aber der Kolben 16 in Folge der Kraft F weiter verlagert, so rutscht dieser mit seiner Außenumfangsfläche 56 sozusagen durch den unter Vorspannung anliegenden Rohrabschnitt 60 des Kupplungselements 58 hindurch. Dementsprechend wird auch jede weitere Verlagerung des Kolbens 16 nicht mehr über den Positionserfassungsstab 70 und den Positionserfassungssensor 84 erfasst.

Wird das Bremspedal später freigegeben, so bewegen sich aufgrund der Wirkung der Rückstellfedern 20, 28 der erste und der zweite Kolben 16,18 zurück. Dabei wird das Kupplungselement 58 aufgrund des Reibschlusses zwischen der Innenumfangsfläche 68 des Rohrabschnitts 60 und der Außenumfangsfläche 56 des ersten Kolbens 16 mit diesem mitgenommen, bis sich das Kupplungselement 58 wieder an das Verschlusselement 52 anlegt. Das Kupplungselement 58 kann einer weiteren Rückstellbewegung des Kolbens 16 wegen dieser Anschlagsituation nicht folgen, so dass der Kolben 16 erneut durch das Kupplungselement 58 unter Überwindung des Reibschlusses hindurchrutscht. Schließlich wird wieder die Ausgangsstellung gemäß Figur 1 erreicht, so dass sich bei einer erneuten Betätigung der Bremse dieselben Gegebenheiten und Relativpositionen hinsichtlich der Positionserfassung einstellen, wie vorstehend beschrieben. Daraus ergibt sich, dass der beabsichtigte Schaltpunkt für ein Bremslichtsignal stets reproduzierbar ist, weil das Kupplungselement 58 immer wieder in seine ursprünglich vorgesehene Ausgangsstellung zurückkehrt.

Die Erfindung zeichnet sich dadurch aus, dass die Positionserfassung nicht mehr über den kompletten Kolbenhub sondern lediglich über einen Teilbereich, vorstehend als Weg x bezeichnet, erstreckt. Die Positionserfassung in diesem Teilbereich reicht aus, um einerseits das Bremslichtsignal zu generieren und andererseits entsprechende Steuerungsmaßnahmen an Schlupfregelsystemen oder dergleichen vorzunehmen. Eine Erfassung des vollständigen Kolbenwegs ist nicht erforderlich, wie von den Erfindern erkannt wurde. Dadurch lässt sich die erfindungsgemäße Hauptbremszylinderanordnung wesentlich kompakter und auch leichter gestalten, als herkömmliche Vorrichtungen, bei denen der komplette Kolbenweg während seiner Hubbewegung erfasst wird.

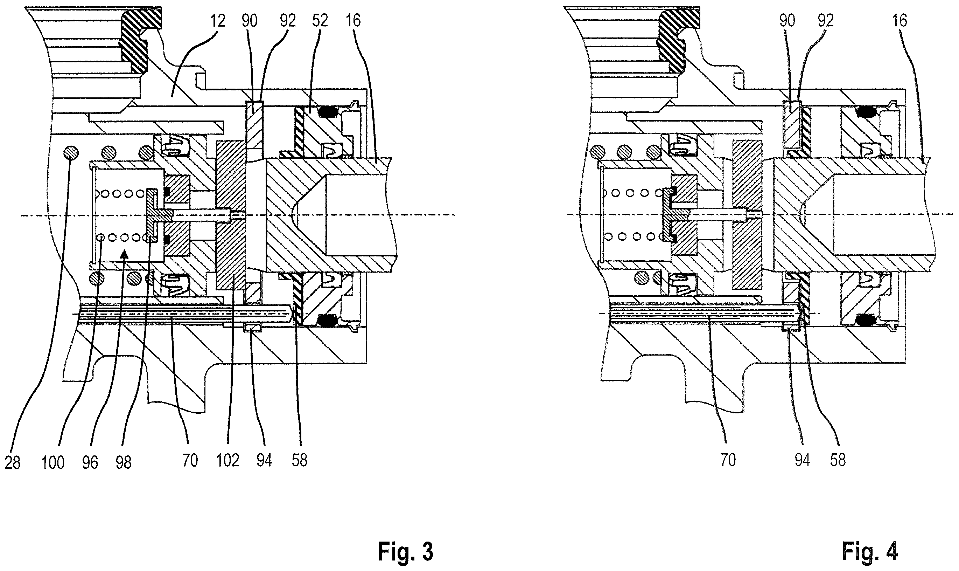

Figuren 3 und 4 zeigen eine zweite Ausführungsform der Erfindung, wobei zur Vermeidung von Wiederholungen und zur Erleichterung der Beschreibung für gleichwirkende oder gleichartige Komponenten dieselben Bezugszeichen verwendet werden, wie bei der Beschreibung der ersten Ausführungsform. Wiederum sind die Ausgangsstellung und eine Betätigungsstellung gezeigt.

Ein wesentlicher Unterschied dieser Ausführungsform zur ersten Ausführungsform besteht darin, dass sich das Kupplungselement 58 nicht mehr an einen integral mit dem Zylindergehäuse 12 ausgebildeten Anschlag anlegt, sondern an ein scheibenförmiges Bauteil 90, das in eine Aufnahmenut 92 im Zylindergehäuse 12 eingesetzt ist. Dieses Bauteil weist auch eine Führungsbohrung 94 zur Führung des Positionserfassungsstabs 70 auf.

Ein weiterer Unterschied dieser Ausführungsform zur ersten Ausführungsform besteht darin, dass der Kolben mit einem Zentralventil 96 versehen ist, das mit einem Ventilstößel 98 in an sich bekannter Weise ausgebildet ist. Der Ventilstößel 98 kann gegen die Wirkung einer Druckfeder 100 in Abhängigkeit von der Stellung eines Riegels 102 geöffnet oder geschlossen werden. In der Ausgangsstellung ist das Ventil 96 geöffnet, so dass eine fluidische Verbindung zu einem Fluidbehälter gegeben ist. Sobald der erste Kolben 16 um einen bestimmten Weg ausgelenkt wird, hebt sich der Riegel 102 von der Scheibe 90 ab und das Zentralventil 96 geht in seinen geschlossenen Zustand über.

Die Funktionsweise hinsichtlich der Positionserfassung ist dieselbe, wie vorstehend mit Bezug auf die erste Ausführungsform beschrieben.

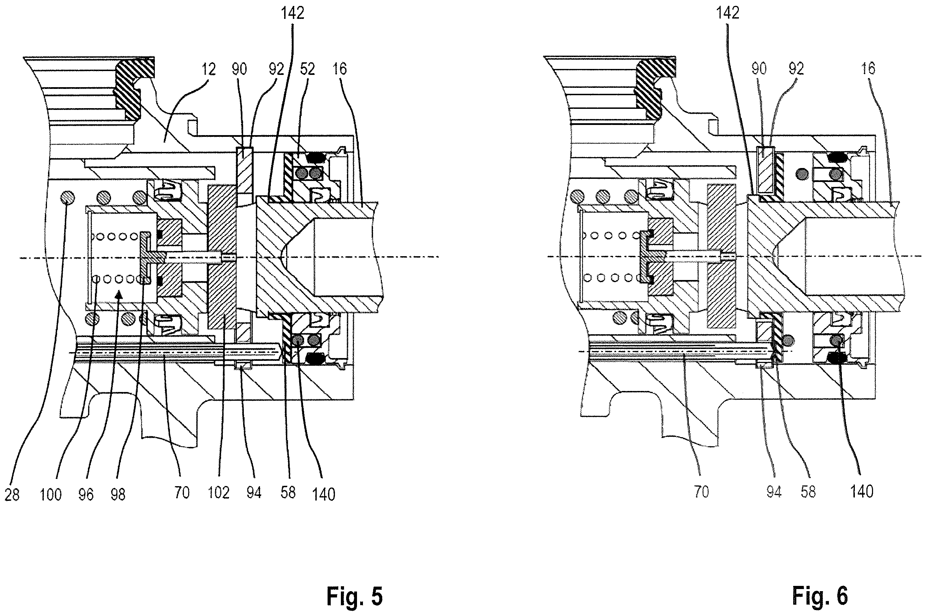

In den Figuren 5 und 6 ist eine Abwandlung der Ausführungsform gemäß Figuren 3 und 4 gezeigt. Wiederum sind eine Ausgangsstellung und eine Betätigungsstellung dargestellt. Ein wesentlicher Unterschied zur Ausführung gemäß den Figuren 3 und 4 ist das Vorsehen einer Durchmesserstufe 142 am Kolben 16. Die von der Durchmesserstufe 142 definierte, dem Grund der Zylinderbohrung 14 abgewandte umlaufende Stirnfläche dient als Anlagefläche für das Kupplungselement 58. Eine Druckfeder 140 ist zwischen dem Kupplungselement 58 und dem gehäusefesten Verschlusselement 52 angeordnet. In der in Fig. 5 gezeigten Ausgangsstellung ist die Druckfeder 140 maximal komprimiert und spannt das Kupplungselement 58 gegen die Durchmesserstufe 142 vor. Analog zur Ausführungsform gemäß Figuren 3 und 4 legt sich das Kupplungselement nach Überschreiten des vorbestimmten Weges an ein scheibenförmiges Bauteil 90 an, wobei die Druckfeder 140 noch nicht vollständig entspannt ist. Dabei liegt die Druckfeder 140 über die gesamte Bewegungsstrecke des Kupplungselements 58 an diesem an und spannt dieses schließlich auch gegen die Scheibe 90 vor.

Diese Ausführungsform bietet den Vorteil, dass die Position des Kupplungselements 58 allein durch ein Zusammenwirken der Druckfeder 140 und den aus Durchmesserstufe 142 und Scheibe 90 gebildeten Anlageflächen stets eindeutig festgelegt ist. Eine radiale Vorspannung des Kupplungselements 58 gegen den Kolben 16 kann daher weniger stark ausgebildet sein oder ganz entfallen. Dies vereinfacht die Montage und mindert Reibungsverluste.

Fig. 7 zeigt eine weitere Abwandlung der Ausführungsform gemäß Figuren 3 und 4. Der einzige Unterschied dieser Ausführungsform besteht darin, dass die Scheibe 90 nicht in einer Aufnahmenut aufgenommen ist, sondern dass das Verschlusselement 52 mit einem axialen Ansatz 104 versehen ist, der die Scheibe 90 in dem Zylindergehäuse 12 festlegt.

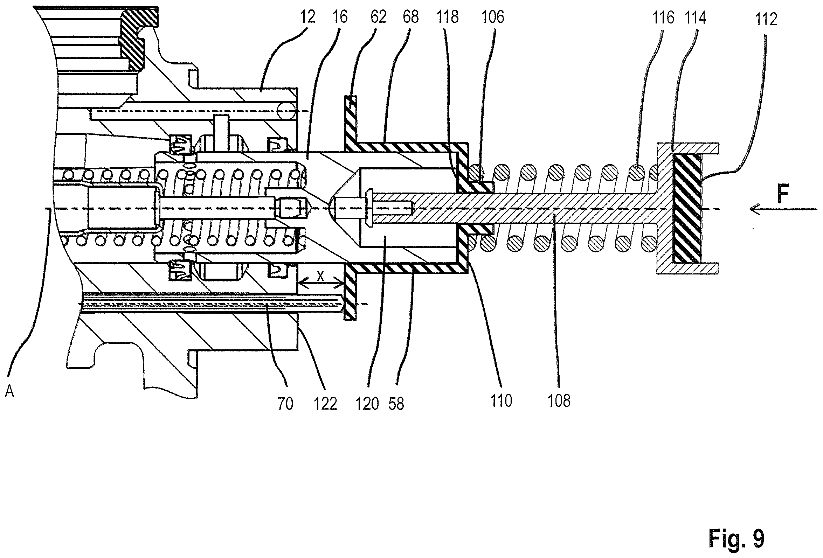

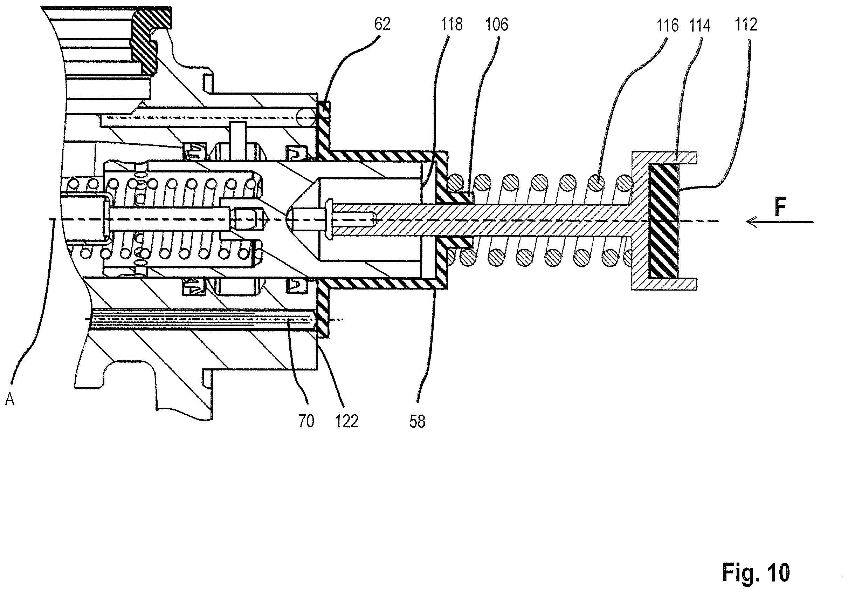

Figuren 9 und 10 zeigen eine fünfte Ausführungsform der Erfindung, wobei zur Vermeidung von Wiederholungen und zur Erleichterung der Beschreibung für gleichwirkende oder gleichartige Komponenten dieselben Bezugszeichen verwendet werden, wie bei der vorstehenden Beschreibung der vorangegangenen Ausführungsform. Wiederum sind die Ausgangsstellung (Figur 9) und eine Betätigungsstellung (Figur 10) gezeigt.

Bei dieser fünften Ausführungsform ragt der Positionserfassungsstab 70 aus dem Zylindergehäuse 12 in axialer Richtung A vor. Das Kupplungselement 58 ist bei dieser Ausführungsform topfartig und gestuft ausgebildet. Es umgibt einerseits das freie rechte Ende des ersten Kolbens 16 mit seinem Ringabschnitt 62 und dem Rohrabschnitt 68. Ferner umgibt es mit einem rohrförmigen Ansatz 106 ein stößelartiges Krafteingangsglied 108, wobei dieser rohrförmige Ansatz 106 über einen Boden 110 mit dem Rohrabschnitt 68 verbunden ist. Das Krafteingangsglied 108 ist T-förmig ausgebildet und nimmt in einem Aufnahmeabschnitt 114 einen Gummikörper 112 auf. Zwischen dem Aufnahmeabschnitt 114 und dem Boden 110 des Kupplungselements 58 ist eine Druckfeder 116 angeordnet, die das Kupplungselement 58 in Anlage mit einer Stirnfläche 118 am freien Ende des ersten Kolbens 16 drückt. Es sei angemerkt, dass das Krafteingangsglied 108 in an sich bekannter Weise in einer Aufnahmeöffnung 120 des ersten Kolbens 16 aufgenommen ist.

Bei einer Betätigung der Bremse wird das Krafteingangsglied 108 mit der Kraft F beaufschlagt. In der Folge bewegt sich der erste Kolben 16 in das Zylindergehäuse 12 hinein. Das Kupplungselement 58 folgt dieser Bewegung so lange, bis der vorbestimmte Weg x zurückgelegt wurde. Während dieser Bewegung wird über den Positionserfassungsstab 70 die aktuelle Position des Kolbens 16 in der vorstehend beschriebenen Weise erfasst. Wird der vorbestimmte Weg x durchlaufen und überschritten, so legt sich das Kupplungselement 58 mit seinem Ringabschnitt 62 an eine Stirnfläche 122 des Zylindergehäuses 12 an und kann sich mit dem Kolben 16 nicht weiter bewegen. Wird der Kolben weiter in das Zylindergehäuse 12 hinein verlagert, so rutscht dieser innerhalb des Rohrabschnitts 68 durch das Kupplungselement 58. Dies kann unter Reibung erfolgen. Alternativ kann aber auch ein hinreichendes Spiel zwischen Kupplungselement 58 und Kolben 16 vorgesehen sein, um die Reibung so gering wie möglich zu halten. Jedenfalls kommt es bei Erreichen des vorbestimmten Wegs x und weiterer Kolbenbewegung in das Zylindergehäuse 12 hinein zu einer Relativbewegung zwischen dem Kupplungselement 58 und dem Kolben 16, wobei die Feder 116 entsprechend dieser Relativbewegung komprimiert wird. Dieser Zustand ist für eine bestimmte Betätigungsstellung beispielhaft in Figur 10 gezeigt.

Wird die Bremse zum Abbau der Bremswirkung freigegeben, so dass sie wieder aufgrund der Rückstellkräfte in ihre Ausgangsstellung zurückgekehrt, so nimmt das Kupplungselement 58 aufgrund der Wirkung der Druckfeder 116 schließlich wieder die Position gemäß Figur 9 relativ zum Kolben 16 ein.

Die Ausführungsform gemäß den Figuren 9 und 10 hat den besonderen Vorteil, dass abgesehen von der Führung des Positionserfassungsstabs 70 im Zylindergehäuse 12 keine Eingriffe am Zylindergehäuse vorgenommen werden müssen. Die Betätigung des Positionserfassungsstabs zur Positionserfassung erfolgt allein durch Maßnahmen, die außerhalb des Zylindergehäuses getroffen werden. Dadurch ergibt sich eine besonders kostengünstige und einfache Gestaltung.

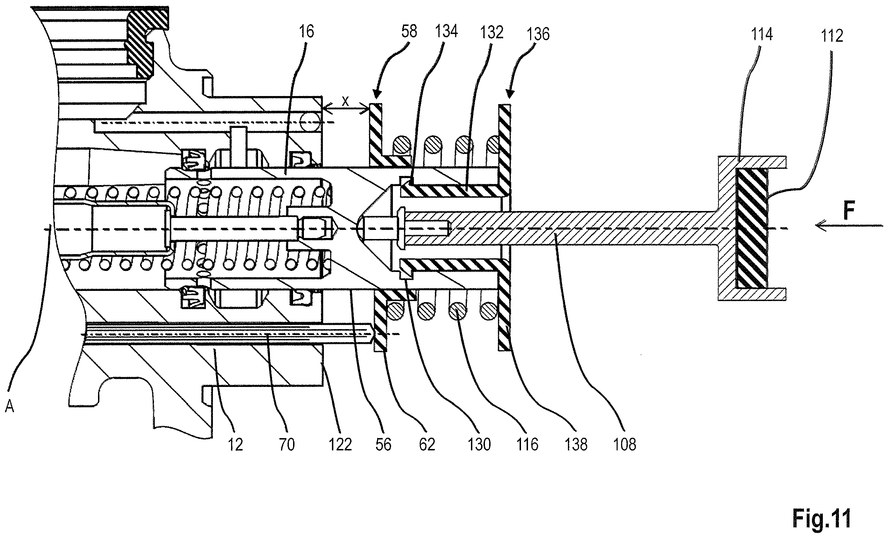

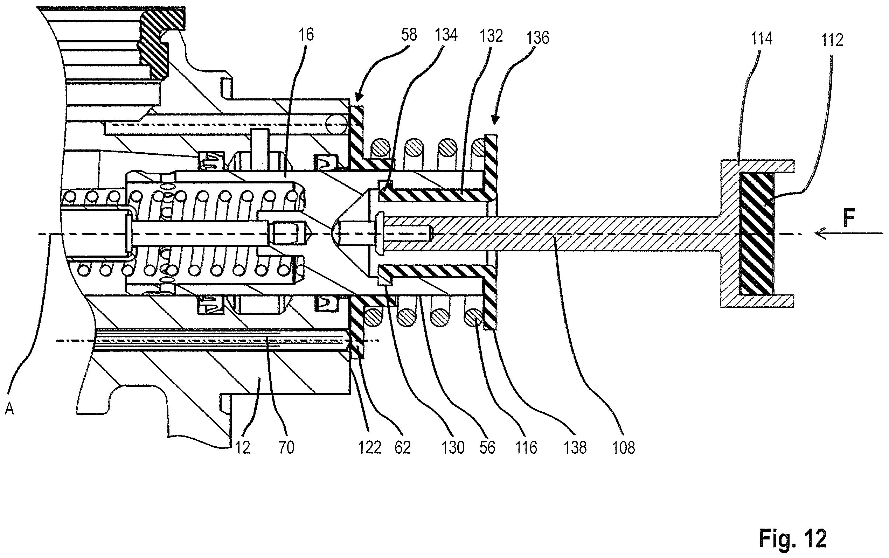

Schließlich zeigen die Figuren 11 und 12 eine sechste Ausführungsform der Erfindung, die der fünften Ausführungsform der Erfindung gemäß den Figuren 9 und 10 ähnlich ist. Bei dieser Ausführungsform ist wiederum das Kupplungselement 58 auf der Außenumfangsfläche 56 des ersten Kolbens 16 aufgenommen, gegebenenfalls unter Reibschluss oder mit Spiel, d.h. weitgehend reibungsfrei. Ferner ist in der Aufnahmeöffnung 120 eine Rastnut 130 vorgesehen. Diese dient dazu, einen rohrförmigen Abschnitt 132 mit Rastvorsprüngen 134 einer Haltebuchse 136 relativ zum ersten Kolben 16 zu fixieren. Die Haltebuchse 136 weist einen scheibenförmigen Ringabschnitt 138 auf, der bezüglich der Längsachse A in radialer Richtung vorsteht. Zwischen dem Ringabschnitt 138 der Haltebuchse 136 und dem Ringabschnitt 62 des Kupplungselements 58 ist eine Druckfeder 116 vorgesehen, die derart stark dimensioniert ist, dass sie in Folge einer Betätigung des Positionierungsstabs 70 nicht oder nicht wesentlich komprimiert wird.

Wird nun wiederum das Krafteingangsglied 108 mit der Kraft F beaufschlagt, so verlagert sich in bekannter Weise der erste Kolben 16 in das Zylindergehäuse 12 hinein. Das Kupplungselement 58 folgt dieser Bewegung so lange, bis der vorbestimmte Weg x zurückgelegt wurde. Während dieser Bewegung wird über den Positionserfassungsstab 70 die aktuelle Position des Kolbens 16 in der vorstehend beschriebenen Weise erfasst. Wird der vorbestimmte Weg x durchlaufen und überschritten, so legt sich das Kupplungselement 58 mit seinem Ringabschnitt 62 an eine Stirnfläche 122 des Zylindergehäuses 12 an und kann sich mit dem Kolben 16 nicht weiter bewegen. Wird der Kolben weiter in das Zylindergehäuse 12 hinein verlagert, so rutscht dieser innerhalb des Rohrabschnitts 68 durch das Kupplungselement 58. Jedenfalls kommt es bei Erreichen des vorbestimmten Wegs x und weiterer Kolbenbewegung in das Zylindergehäuse 12 hinein zu einer Relativbewegung zwischen dem Kupplungselement 58 und dem Kolben 16, wobei die Feder 116 entsprechend dieser Relativbewegung komprimiert wird. Dieser Zustand ist für eine bestimmte Betätigungsstellung beispielhaft in Figur 12 gezeigt.

Wird die Bremse freigegeben, so dass sie wieder aufgrund der Rückstellkräfte in ihre Ausgangsstellung zurückgekehrt, so nimmt das Kupplungselement 58 aufgrund der Wirkung der Druckfeder 116 schließlich wieder die Position gemäß Figur 11 relativ zum Kolben 16 ein.

Auch die Ausführungsform gemäß den Figuren 11 und 12 zeichnet sich durch eine verhältnismäßig einfache Gestaltung aus. Es müssen lediglich Maßnahmen am ersten Kolben 16 vorgenommen werden, um die vorstehend beschriebenen Vorteile der lediglich über einen Teilbereich der Hubbewegung durchgeführten Positionserfassung nutzen zu können.

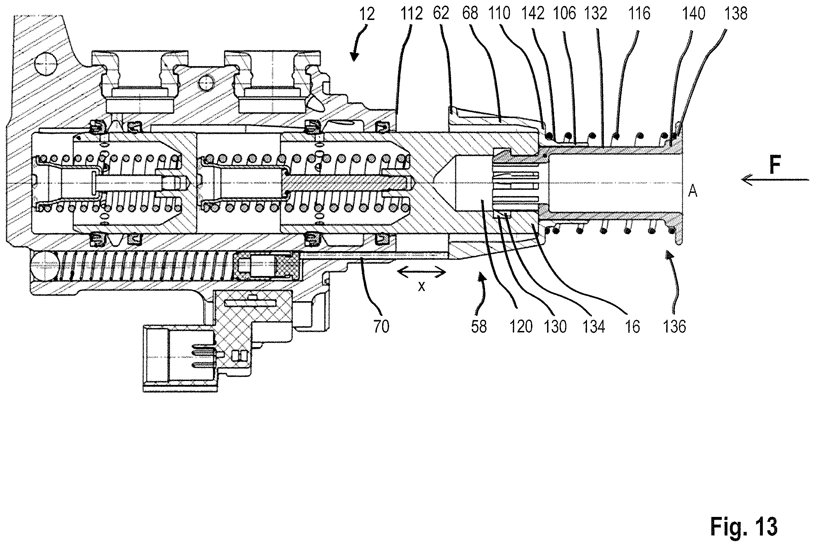

Ferner ist in Figur 13 eine siebte Ausführungsform gezeigt, die sich an die fünfte und sechste Ausführungsform gemäß den Figuren 9 und 10 sowie 11 und 12 anlehnt. Im weitesten Sinne ist bei dieser Ausführungsform eine Kombination eines topfartigen Kupplungselments 58 analog zu den Figuren 9 und 10 mit einer in der Aufnahmeöffnung 120 des Kolbens 16 einrastenden Haltebuchse 136 gemäß Figuren 10 und 11 vorgesehen. Zwischen diesen Komponenten ist wiederum eine Druckfeder 116 angeordnet. In Fig. 13 befindet sich die Hauptbremszylinderanordnung 10 allgemein in einer nicht bremsaktiven Stellung, bei der der Kolben 16 in seiner Ausgangsstellung positioniert ist.

Wie aus Figur 13 ersichtlich, ist das Kupplungselement 58 erneut mit einem Ringabschnitt 62, einem rohrförmigen Abschnitt 68, einem rohrförmigen Ansatz 106 und einem Boden 110 ausgebildet. Die vorzugsweise aus Kunststoff hergestellte Haltebuchse 136 weist wiederum einen rohrförmigen Abschnitt 132 mit Rastvorsprüngen 134 auf, die in einer Rastnut 130 innerhalb der Aufnahmeöffnung 120 eingreifen. Ebenso ist ein Ringabschnitt 138 am in Fig. 13 rechten Ende vorgesehen, der als Anlagefläche für die Druckfeder 116 dient. Die Festlegung der Druckfeder 116 an der Haltebuchse 136 erfolgt mittels einer Durchmesserstufe 140 (in Figur 13), auf welche die Druckfeder 116 unter einer elastischen Aufweitung aufgeschoben wird. An dem Kupplungselement 58 liegt die Druckfeder 116 an der Außenwand des Bodens 110 an und ist ebenfalls mittels einer Durchmesserstufe 142 daran festgelegt.

Gegenüber der sechsten Ausführungsform ist der rohrförmigen Abschnitt 132 der Haltebuchse 136 mit einer deutlich größeren axialen Länge ausgebildet, so dass der Ringabschnitt 138 von dem Kolben 16 axial beabstandet angeordnet ist. Analog zu den vorigen Beispielen kann ein nicht gezeigtes Betätigungsorgan in bekannter Weise in der Aufnahmeöffnung 120 des Kolbens 16 befestigt werden und sich entlang der Längsachse A durch die Haltebuchse 136 hindurch erstrecken.

Das Kupplungselement 58 umgibt bei dem gezeigten Ausführungsbeispiel abschnittsweise den rohrförmigen Abschnitt 132 der Haltebuchse 136 mit seinem rohrförmigen Ansatz 106 und liegt daran unmittelbar an. Somit ist das Kupplungselement 58 entlang des rohrförmigen Abschnitts 132 axial verlagerbar geführt. Dabei kann auch ein Reibschluss zwischen diesen Elementen vorgesehen sein oder alternativ eine reibungsfreies Spiel.

Die Funktionsweise der Anordnung aus Figur 13 entspricht im Wesentlichen derjenigen der vorstehend beschriebenen fünften und sechsten Ausführungsbeispiele. Entsprechend wird das Kupplungselement 58 bei Ausüben eine Betätigungskraft F zunächst gemeinsam mit dem Kolben 16 über eine Strecke x verlagert und verschiebt dabei auch einen Positionserfassungsstab 70. Nach Durchlaufen der Strecke x gerät der Ringabschnitt 62 des Kupplungselements 58 in Anlage mit einer Strinfläche 112 des Bremszylindergehäuses 12, so dass der Kolben 16 relativ zu dem feststehenden Kupplungselement 58 weiterverlagert wird. Dabei bewegt sich die Haltebuchse 136 durch den rohrförmigen Ansatz 106 unter einer Kompression der Druckfeder 116 hindurch. Bei der Rückbewegung des Kolbens 16 in die in Fig. 13 gezeigte Ausgangsstellung gerät dieser wiederum in Anlage mit dem Boden 110 des Kupplungselments 58, so dass letzteres unter zusätzlicher Wirkung der Rückstellkraft der Druckfeder 116 in seine Ausgangsstellung zurückbewegt wird.

## Patentansprüche

1. Hauptbremszylinderanordnung (10) mit Betätigungserfassung für eine Kraftfahrzeugbremsanlage, mit wenigstens einer Kolbenanordnung mit einem Kolben (16), der in einer Zylinderbohrung (14) in einem Zylindergehäuse (12) verlagerbar geführt ist, wobei der Kolben (16) mit der Zylinderbohrung (14) eine mit einem hydraulischen Bremskreislauf fluidisch gekoppelte Druckkammer (44, 46) begrenzt und bei einem Vorhub von einer Ausgangsstellung in eine mögliche Betätigungsstellung entlang einer Verlagerungsachse, die im Wesentlichen mit einer Längsasche (A) der Zylinderbohrung (14) zusammenfällt, verlagert werden kann, und bei einem Rückhub von einer Betätigungsstellung in die Ausgangsstellung verlagert wird, wobei dem Kolben (16) ein Kupplungselement (58) zugeordnet ist, welches zur gemeinsamen Verlagerung mit einem Positionserfassungsstab (70) gekoppelt ist, der zur Zylinderbohrung (14) im wesentlichen parallel verlagerbar geführt ist, wobei die Position des Positionserfassungsstabs (70) mittels eines an dem Zylindergehäuse (12) angebrachten Positionserfassungssensor (84) erfassbar ist,
**dadurch gekennzeichnet, dass** das Kupplungselement (58) relativ zum Kolben (16) zu einer gemeinsamen Hubbewegung mit diesem arretierbar ist, und dass nach Überschreiten eines vorbestimmten Wegs (x) der Hubbewegung, der Kolben (16) relativ zum Kupplungselement (58) weiter verlagerbar ist.

2. Hauptbremszylinderanordnung (10) nach Anspruch 1,
**dadurch gekennzeichnet, dass** dem Kupplungselement (58) eine erste Anlagefläche des Kolbens (16), des Zylindergehäuses (12) oder eines mit einem von diesem Elementen gekoppelten Bauteils (52, 136) zugeordnet ist, an der das Kupplungselement (58) in der Ausgangsstellung anliegt oder sich an dieser abstützt.

3. Hauptbremszylinderanordnung (10) nach Anspruch 1 oder 2,
**dadurch gekennzeichnet, dass** dem Kupplungselement (58) eine zweite Anlagefläche des Kolbens (16), des Zylindergehäuses (12) oder eines mit diesem gekoppelten Bauteils (90) zugeordnet ist, an der das Kupplungselement (58) beim Überschreiten des vorbestimmten Wegs (x) der Hubbewegung anliegt.

4. Hauptbremszylinderanordnung (10) nach Anspruch 2 oder 3,
**dadurch gekennzeichnet, dass** die erste oder/und die zweite Anlagefläche Teil eines integral ausgebildeten Abschnitts des Zylindergehäuses (12) ist.

5. Hauptbremszylinderanordnung (10) nach einem der Ansprüche 2 bis 4,
**dadurch gekennzeichnet, dass** die erste oder/und die zweite Anlagefläche an einem im Zylindergehäuse (12) ausgebildeten Zusatzelement vorgesehen ist, wobei das Zusatzelement insbesondere in Form einer den Kolben in Umfangsrichtung umschließenden Scheibe (90), eines ringförmigen Dichtungsbauteils oder eines ringförmigen Verschlusselements (52) ausgebildet ist.

6. Hauptbremszylinderanordnung (10) nach einem der vorangehenden Ansprüche,
**dadurch gekennzeichnet, dass** das Kupplungselement (58) ein den Kolben (16) zumindest teilweise in Umfangsrichtung umgreifender Körper ist.

7. Hauptbremszylinderanordnung (10) nach Anspruch 5,
**dadurch gekennzeichnet, dass** das Kupplungselement (58) einen Anlagering (62) aufweist, der mit einer Anlagefläche (68) versehen ist, über die es an dem Kolben (16) angreift.

8. Hauptbremszylinderanordnung (10) nach Anspruch 6 oder 7,
**dadurch gekennzeichnet, dass** das Kupplungselement (58) an dem Kolben (16) unter radialer Vorspannung anliegt und durch Reibschluss mit dem Kolben (16) gekoppelt ist, wobei insbesondere die Anlagefläche (68) mit einem Reibbelag versehen ist.

9. Hauptbremszylinderanordnung (10) nach einem der vorangehenden Ansprüche,
**dadurch gekennzeichnet, dass** das Kupplungselement (58) über ein Federelement (116, 140) zur gemeinsamen Bewegung mit dem Kolben (16) gekoppelt ist.

10. Hauptbremszylinderanordnung (10) nach Anspruch 9,
**dadurch gekennzeichnet, dass** das Kupplungselement (58), insbesondere ein topfartig ausgebildetes Kupplungselement (58), über das Federelement (116, 140) in eine Ausgangsstellung relativ zu dem Kolben (16) vorgespannt ist.

11. Hauptbremszylinderanordnung (10) nach Anspruch 10,
**dadurch gekennzeichnet, dass** das Kupplungselement (58) einen Anschlagring (62) aufweist, mit dem es infolge der Hubbewegung des Kolbens (16) gegen das Zylindergehäuse (12) bei Überschreiten des vorbestimmten Wegs (x) der Hubbewegung in Anlage bringbar ist, wobei das Kupplungselement (16) bei fortschreitender Hubbewegung des Kolbens (16), insbesondere unter Einwirkung des Federelements (116, 142), relativ zum Zylindergehäuse (12) ortsfest bleibt.

12. Hauptbremszylinderanordnung (10) nach einem der Ansprüche 9 bis 11, **dadurch gekennzeichnet, dass** sich das Federelement (116, 140) einenends an dem Kupplungselement (58) und anderenends an einer kolbenfesten Haltebuchse (136) oder einem zylindergehäusefesten Verschlusselement (52) abstützt.

13. Hauptbremszylinderanordnung (10) nach Anspruch 12,
**dadurch gekennzeichnet, dass** die Haltebuchse (136) als gesondertes Bauteil ausgebildet und am Kolben (16), vorzugsweise durch Verrasten oder über zusätzliche Fixiermittel, fixiert ist.

14. Hauptbremszylinderanordnung (10) nach einem der vorangegangenen Ansprüche,
**dadurch gekennzeichnet, dass** der Positionserfassungsstab (70) in einem Führungsschacht (72) innerhalb des Zylindergehäuses (12) geführt ist, wobei der Führungsschacht (72) mit einer Durchmesserstufe ausgebildet ist, und wobei der Positionserfassungsstab (70) einen durchmesserkleineren Erfassungsabschnitt aufweist, an dem ein Sensorelement (76) vorgesehen ist.

15. Hauptbremszylinderanordnung (10) nach Anspruch 14,
**dadurch gekennzeichnet, dass** das Sensorelement (76) einen Magnetkörper (78) aufweist und dass der Positionserfassungssensor (84) ein Hall-Sensor ist.

## Claims

1. A master brake cylinder arrangement (10) with actuation detection for a motor vehicle brake system, having at least one piston arrangement with a piston (16), which is displaceably guided in a cylinder bore (14) in a cylinder housing (12), wherein the piston (16) delimits a pressure chamber (44, 46) with the cylinder bore (14), which is fluidically connected to a hydraulic brake circuit, and can be displaced during a forward stroke from an initial position to a possible actuated position along a displacement axis, which essentially coincides with a longitudinal axis (A) of the cylinder bore (14), and is displaced from an actuated position to the initial position during a return stroke, wherein a coupling element (58) is assigned to the piston (16), which is coupled for joint displacement to a position detection rod (70), which is displaceably guided essentially in parallel with the first cylinder bore (14), wherein the position of the position detection rod (70) is detectable with a position detection sensor (84) attached to the cylinder housing (12),
**characterized in that** the coupling element (58) is lockable relative to the piston (16) for a joint stroke movement together with the latter, and after exceeding a predetermined distance (x) of the stroke movement, the piston (16) is further displaceable relative to the coupling element (58).

2. The master brake cylinder arrangement (10) according to claim 1,
**characterized in that** a first abutment surface of the piston (16), of the cylinder housing (12) or of a component (52, 136) coupled thereto is assigned to the coupling element (58), the coupling element (58) abutting against or being supported on said surface in the initial position.

3. The master brake cylinder arrangement (10) according to claim 1 or 2,
**characterized in that** a second abutment surface of the piston (16), of the cylinder housing (12) or of a component coupled thereto is assigned to the coupling element (58), the coupling element (58) abutting against said surface on exceeding the predetermined distance (x) of the stroke movement.

4. The master brake cylinder arrangement (10) according to claim 2 or 3,
**characterized in that** the first and/or second abutment surface is part of an integrally formed section of the cylinder housing (12).

5. The master brake cylinder arrangement (10) according to any one of claims 2 to 4,
**characterized in that** the first and/or second abutment surface is provided on an additional element formed in the cylinder housing (12), wherein the additional element is designed in particular in the form of a disc (90) surrounding the piston (16) in the circumferential direction, of an annular sealing component or of an annular closure element (52).

6. The master brake cylinder arrangement (10) according to any one of the preceding claims,
**characterized in that** the coupling element (58) is a body at least partially encompassing the piston (16) in the circumferential direction.

7. The master brake cylinder arrangement (10) according to claim 5, **characterized in that** the coupling element (58) has an abutment ring (62), which is provided with an abutment surface (68), by means of which it engages with the piston (16).

8. The master brake cylinder arrangement (10) according to claim 6 or 7,
**characterized in that** the coupling element (58) abuts against the piston (16) under radial bias and is coupled to the piston (16) by frictional engagement, wherein the abutment surface (68) is provided with a friction lining in particular.

9. The master brake cylinder arrangement (10) according to any one of the preceding claims,
**characterized in that** the coupling element (58) is coupled to the piston (16) by a spring element (116, 140) for joint movement.

10. The master brake cylinder arrangement (10) according to claim 10,
**characterized in that** the coupling element (58), in particular a coupling element (58) designed like a pot, is prestressed by the spring element (116, 140) into an initial position relative to the piston (16).

11. The master brake cylinder arrangement (10) according to claim 10,
**characterized in that** the coupling element (58) has a stop ring (62), with which, owing to the stroke movement of the piston (16), it can be brought into abutment against the cylinder housing (12) on exceeding the predetermined distance (x) of the stroke movement, wherein the coupling element (16) remains stationary relative to the cylinder housing (12) with advancing stroke movement of the piston (16), in particular under the action of the spring element (116, 142).

12. The master brake cylinder arrangement (10) according to any one of claims 9 to 11,
**characterized in that** the spring element (116, 140) is supported on the coupling element (58) at one end, and on a holding bush (136) secured on the piston (16) or a closure element (52) secured on the cylinder housing (12) at the other end.

13. The master brake cylinder arrangement (10) according to claim 12, **characterized in that** the holding bush (136) is designed as a separate component and is secured on the piston (16), preferably by locking or by additional securing means.

14. The master brake cylinder arrangement (10) according to any one of the preceding claims,
**characterized in that** the position detection rod (70) is guided in a guide shaft (72) inside the cylinder housing (12), wherein the guide shaft (72) is designed with a diameter step, and wherein the position detection rod (70) has a detection section with a smaller diameter, and a sensor element (76) is provided on the latter.

15. The master brake cylinder arrangement (10) according to claim 14,
**characterized in that** the sensor element (76) has a magnetic body (78) and the position detection sensor (84) is a Hall sensor.

## Revendications

1. Ensemble maître-cylindre de frein (10) à détection d'actionnement pour un système de freinage de véhicule automobile, comportant au moins un ensemble piston comprenant un piston (16) qui est guidé de manière déplaçable dans un alésage de cylindre (14) d'un carter de cylindre (12), le piston (16) délimitant avec l'alésage de cylindre (14) une chambre de pression (44, 46) couplée fluidiquement à un circuit de freinage hydraulique et pouvant être déplacé, lors d'une course d'aller, d'une position initiale dans une position d'actionnement possible le long d'un axe de déplacement qui coïncide sensiblement avec un axe longitudinal (A) de l'alésage de cylindre (14), et étant déplacé, lors d'une course de retour, d'une position d'actionnement dans la position initiale, un élément d'accouplement (58) étant associé au piston (16), lequel est couplé, pour permettre un déplacement commun, à une tige de détection de position (70) qui est guidée sensiblement parallèlement à l'alésage de cylindre (14), la position de la tige de détection de position (70) pouvant être détectée au moyen d'un capteur de détection de position (84) monté sur le carter de cylindre (12),
**caractérisé en ce que** l'élément d'accouplement (58) peut être bloqué par rapport au piston (16) pour une course de déplacement commune avec celui-ci, et **en ce que** le piston (16) peut être déplacé encore par rapport à l'élément d'accouplement (58) après qu'un trajet prédéterminé (x) de la course de déplacement a été dépassé.

2. Ensemble maître-cylindre de frein (10) selon la revendication 1,
**caractérisé en ce qu'**une première surface d'appui du piston (16), du carter de cylindre (12) ou d'un composant (52, 136) couplé à l'un de ces éléments est associée à l'élément d'accouplement (58), contre laquelle l'élément d'accouplement (58) s'applique ou s'appuie dans la position initiale.

3. Ensemble maître-cylindre de frein (10) selon la revendication 1 ou 2,
**caractérisé en ce qu'**une deuxième surface d'appui du piston (16), du carter de cylindre (12) ou d'un composant (90) couplé à celui-ci est associée à l'élément d'accouplement (58), contre laquelle l'élément d'accouplement (58) s'applique lorsque le trajet prédéterminé (x) de la course de déplacement est dépassé.

4. Ensemble maître-cylindre de frein (10) selon la revendication 2 ou 3,
**caractérisé en ce que** la première et/ou la deuxième surface d'appui fait partie d'une partie formée d'un seul tenant avec le carter de cylindre (12).

5. Ensemble maître-cylindre de frein (10) selon l'une des revendications 2 à 4,
**caractérisé en ce que** la première ou/et la deuxième surface d'appui est prévue sur un élément supplémentaire formé dans le carter de cylindre (12), l'élément supplémentaire étant formé en particulier sous la forme d'un disque (90) entourant le piston dans la direction circonférentielle, d'un composant d'étanchéité annulaire ou d'un élément de fermeture annulaire (52).

6. Ensemble maître-cylindre de frein (10) selon l'une des revendications précédentes,
**caractérisé en ce que** l'élément d'accouplement (58) est un corps entourant au moins partiellement le piston (16) dans la direction circonférentielle.

7. Ensemble maître-cylindre de frein (10) selon la revendication 5,
**caractérisé en ce que** l'élément d'accouplement (58) présente une bague de butée (62) qui est pourvue d'une surface d'appui (68) par l'intermédiaire de laquelle il agit sur le piston (16).

8. Ensemble maître-cylindre de frein (10) selon la revendication 6 ou 7,
**caractérisé en ce que** l'élément d'accouplement (58) s'applique contre le piston (16) sous précontrainte radiale et est couplé au piston (16) par friction, en particulier la surface d'appui (68) étant pourvue d'une garniture de friction.

9. Ensemble maître-cylindre de frein (10) selon l'une des revendications précédentes,
**caractérisé en ce que** l'élément d'accouplement (58) est couplé au piston (16) par l'intermédiaire d'un élément formant ressort (116, 140) pour le déplacement commun.

10. Ensemble maître-cylindre de frein (10) selon la revendication 9,
**caractérisé en ce que** l'élément d'accouplement (58), en particulier un élément d'accouplement en forme de pot (58), est précontraint dans une position initiale par rapport au piston (16) au moyen de l'élément formant ressort (116, 140).

11. Ensemble maître-cylindre de frein (10) selon la revendication 10,
**caractérisé en ce que** l'élément d'accouplement (58) présente une bague de butée (62) avec laquelle il peut être mis en appui contre le carter de cylindre (12) par suite de la course de déplacement du piston (16) lorsque le trajet prédéterminé (x) de la course de déplacement est dépassé, l'élément d'accouplement (16) restant fixe par rapport au carter de cylindre (12) lorsque le piston (16) poursuit sa course de déplacement, en particulier sous l'action de l'élément formant ressort (116, 142).

12. Ensemble maître-cylindre de frein (10) selon l'une des revendications 9 à 11,
**caractérisé en ce que** l'élément formant ressort (116, 140) s'appuie à une extrémité sur l'élément d'accouplement (58) et à l'autre extrémité sur une douille de retenue (136) solidaire du piston ou un élément de fermeture (52) solidaire du carter de cylindre.

13. Ensemble maître-cylindre de frein (10) selon la revendication 12,
**caractérisé en ce que** la douille de retenue (136) est réalisée sous la forme d'un composant séparé et fixée au piston (16), de préférence par encliquetage ou par des moyens de fixation supplémentaires.

14. Ensemble maître-cylindre de frein (10) selon l'une des revendications précédentes,
**caractérisé en ce que** la tige de détection de position (70) est guidée dans un puits de guidage (72) à l'intérieur du carter de cylindre (12), le puits de guidage (72) étant formé avec un étagement de diamètres et la tige de détection de position (70) présentant une partie de détection de plus petit diamètre sur laquelle un élément capteur (76) est prévu.

15. Ensemble maître-cylindre de frein (10) selon la revendication 14,
**caractérisé en ce que** l'élément capteur (76) présente un corps magnétique (78) et **en ce que** le capteur de détection de position (84) est un capteur à effet Hall.
